# DEMANDE DE BREVET EUROPEEN

(11) **EP 2 335 484 A1**
(43) Date de publication de la demande: **22.06.2011**
(21) Numéro de dépôt: 10290664.1
(22) Date de dépôt: 20.12.2010
(51) Int. Cl.: A21B 5/02

(54) **Dispositif pour la pré-cuisson des pâtes pour pâtisseries notamment avant de les garnir**

(30) Priorité: 18.12.2009 FR 0906132
(71) Demandeur: Pyrat, Daniel, 94460 Valenton (FR)
(72) Inventeur: Pyrat, Daniel, 94460 Valenton (FR)
(74) Mandataire: Hammond, William

(57) **Abrégé**

Dispositif pour la pré-cuisson des pâtes pour pâtisseries comprenant un moule (1) et un contre-moule (2), comprenant chacun un fond (3,4) et une paroi verticale (5,6) disposée autour dudit fond.

Le contre-moule (2) est de même géométrie que le moule (1) dans lequel il s'emboîte avec un certain jeu.

Application notamment dans le domaine de la restauration industrielle.

## Description

La présente demande de brevet concerne un dispositif pour la pré-cuisson des pâtes pour pâtisseries notamment avant de les garnir.

Les pâtes pour pâtisseries sont classées en trois grandes catégories : les pâtes sablées, les pâtes brisées et les pâtes feuilletées. Si précuire des pâtes sablées ne présentent guère de problème, il n'en est pas de même pour les deux autres catégories. En effet, une pré-cuisson de celles-ci conduit bien souvent à une pâte dont le côté exposé à la chaleur, c'est-à-dire celui en contact avec le moule, est coloré tandis que l'autre présente une couleur blanche, signe d'une cuisson insuffisante. De plus, on note assez souvent un aspect non plan du fond d'une telle pâte pré-cuite : un tel fond peut ainsi prendre une forme bombée rédhibitoire pour maintenir une garniture liquide ou semi-liquide ; de même, les côtés de cette pâte auront tendance à présenter une forme en bourrelet également rédhibitoire pour maintenir une garniture liquide ou semi-liquide.

Différentes techniques sont actuellement utilisées pour remédier à cet inconvénient : par exemple, disposer un sac de billes métalliques sur la pâte une fois disposée dans le moule avant pré-cuisson. Cette technique permet, certes, de maintenir la pâte en contact sur le fond du moule ; mais les billes métalliques ne jouent pas le rôle d'une source de chaleur secondaire, contrairement aux attentes. Ce procédé entraîne donc nécessairement une cuisson différentielle entre le fond et les bords, qui sont donc plus cuits d'où un fort risque d'aspect brûlé lors d'une deuxième cuisson de la pâte avec la garniture. De plus, on note souvent l'existence d'un rétreint également préjudiciable.

Néanmoins, une telle technique n'est en réalité qu'un pis-aller ne donnant pas pleinement satisfaction. De plus, sur le plan de la sécurité alimentaire, elle n'est pas exempte de risques.

Aussi un des buts de la présente invention est-il de fournir un dispositif qui permet d'obvier aux inconvénients ci-dessus.

Un autre but de l'invention est de fournir un tel dispositif qui soit d'un coût faible et d'un usage aisé.

Ces buts, ainsi que d'autres qui apparaîtront par la suite, sont atteints par un dispositif pour la pré-cuisson des pâtes pour pâtisseries comprenant un moule et un contre-moule comprenant chacun un fond et une paroi verticale disposée autour de ce fond, lequel dispositif est caractérisé, selon la présente invention, par le fait que le contre-moule est de même géométrie que ce moule dans lequel il s'emboîte avec un certain jeu.

Avantageusement, le contre-moule comporte un fond percé de trous, qui, selon une mode de réalisation préféré, sont de forme conique, la base du cône étant tournée vers le fond du moule lorsque le contre-moule est en place dans le moule.

De préférence, la surface totale de ces trous représente au plus 50% de la surface totale du fond du contre-moule.

Avantageusement, la paroi verticale du contre-moule est d'une hauteur au moins égale à celle de la paroi correspondante du moule.

Selon un mode réalisation préféré, le bord de la paroi du contre-moule comporte une collerette s'étendant sensiblement à l'horizontale au-dessus de la paroi correspondante du moule.

De préférence, le fond du contre-moule comporte une zone aimantée.

La description qui va suivre, et qui ne comporte aucun caractère limitatif, doit être lue en regard des figures annexées, parmi lesquelles :

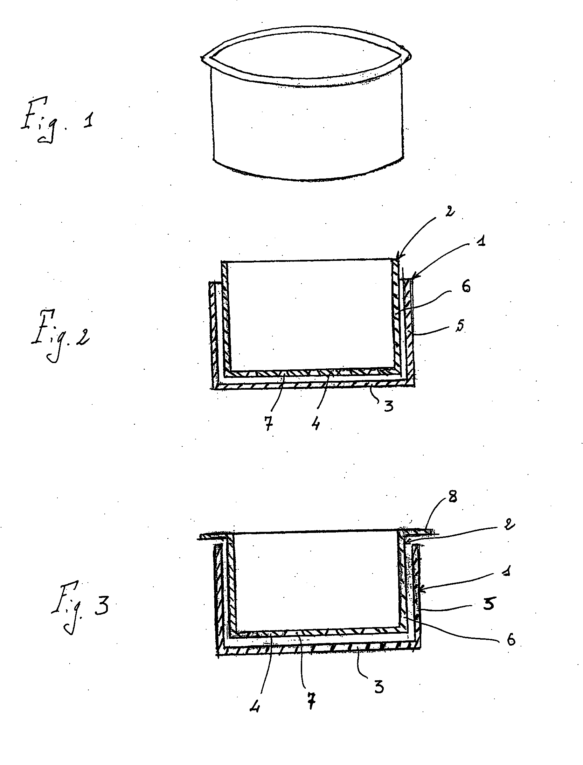

- La figure 1 est une vue en perspective d'un dispositif selon la présente invention ;
- La figure 2 est une vue en coupe verticale du dispositif représenté à la figure 1 selon un de ses plans verticaux de symétrie ; et,
- La figure 3 est une vue en coupe verticale d'un autre mode de réalisation du dispositif selon la présente invention.

Ainsi qu'on peut le voir sur ces figures, un dispositif pour la pré-cuisson des pâtes pour pâtisseries comprend un moule 1 et un contre-moule 2 de même forme que le moule 1 et qui s'emboîte dedans tout en ménageant un espace entre eux. Le moule 1 et le contre-moule 2 comprennent chacun un fond, respectivement 3 et 4, et une paroi verticale, respectivement 5 et 6, autour de ce fond 3 ou 4. Dans le présent exemple de réalisation, le moule 1 et donc le contre-moule 2 sont circulaires.

Selon la présente invention, le fond 4 du contre-moule 2 est percé de trous 7 ; la surface totale de ces trous 7 représente au plus 50% de la surface totale du fond 4. Ces trous permettent à la vapeur d'eau, ou autre gaz, de s'échapper de la pâte disposée entre le moule 1 et le contre-moule 2.

Selon une variante de réalisation, chaque trou 7 est de forme conique, la base du cône étant tournée vers le fond 3 du moule 1.

La paroi 6 du contre-moule 2 est un peu plus haute que celle 5 du moule 1 et comporte, selon un mode de réalisation préféré, un rebord 8 qui s'étend sensiblement à l'horizontal au-dessus de la paroi verticale 5 du moule 1 : cette forme de réalisation permet d'éviter que le bord de la pâte disposée entre le moule 1 et le contre-moule 2 ne soit pas plus cuit que le reste de la pâte.

Les faces du moule 1 et du contre-moule 2 qui seront en contact avec la pâte à pré-cuire peuvent être recouvertes d'un produit auquel cette pâte n'adhérera pas afin d'en faciliter le démoulage. Parmi ces produits, le plus connu est le para-tétra-fluoro-éthylène. On peut aussi les recouvrir d'une feuille de papier ingraissable tel que du papier sulfurisé.

Le poids du contre-moule 2 doit être d'environ de deux à cinq fois celui de la pâte à pré-cuire.

Dans le cas de pâtisserie industrielle, la manipulation du contre-moule 2 sera facilitée si celui-ci peut être déposé et retiré automatiquement. Pour cela, il peut être prévu que le contre-moule 2 comporte dans son fond 4 des moyens de manipulation tels qu'une zone aimantée.

Lorsque l'on veut pré-cuire une pâte pour pâtisseries avec un dispositif selon la présente invention, on dispose cette pâte dans le moule 1 puis le contre-moule 2 et on chauffe à la température voulue. A la fin du temps de cuisson, on retire le contre-moule 2 : la pâte présente le même aspect coloré sur ses deux faces et n'est pas brûlée sur son bord.

## Revendications

1. Dispositif pour la pré-cuisson des pâtes pour pâtisseries comprenant un moule (1) et un contre-moule (2), comprenant chacun un fond (3, 4) et une paroi verticale (5,6) disposée autour dudit fond, ledit contre-moule (2) étant de même géométrie que ledit moule (1) dans lequel il s'emboîte avec un certain jeu, **caractérisé par le fait que** le bord de la paroi verticale (6) du contre-moule (2) comporte une collerette (8) s'étendant sensiblement à l'horizontale au-dessus de la paroi verticale (5) du moule (1).

2. Dispositif selon la revendication 1, **caractérisé par le fait que** le fond (4) dudit contre-moule (2) est percé de trous (7).

3. Dispositif selon la revendication 2, **caractérisé par le fait qu'**environ la moitié de la surface du fond (4) du contre-moule (2) comporte des trous (7).

4. Dispositif selon l'une quelconque des revendications 1 à 3, **caractérisé par le fait que** le fond (4) du contre-moule (2) comporte une zone aimantée.
